Europäisches Patentamt

European Patent Office

Office européen des brevets

(11) Veröffentlichungsnummer: **0 411 430 A2**

# (12) EUROPÄISCHE PATENTANMELDUNG

(21) Anmeldenummer: **90114110.1**

(51) Int. Cl.⁵: **B23Q 1/26**, F16C 29/02

(22) Anmeldetag: **24.07.90**

(30) Priorität: **03.08.89 DE 3925642**

(43) Veröffentlichungstag der Anmeldung:
**06.02.91 Patentblatt 91/06**

(84) Benannte Vertragsstaaten:
**CH DE DK ES FR GB IT LI SE**

(71) Anmelder: **CHIRON-WERKE GMBH & CO. KG
KG
Talstrasse 23
D-7200 Tuttlingen(DE)**

(72) Erfinder: **Winkler, Hans-Henning, Dr.-Ing.
Regerweg 3
D-7200 Tuttlingen(DE)**
Erfinder: **Rütschle, Eugen, Dipl.-Ing.
Schönenbergstrasse 20
D-7202 Mühlheim(DE)**

(74) Vertreter: **Witte, Alexander, Dr.-Ing. et al
Augustenstrasse 7
D-7000 Stuttgart 1(DE)**

(54) **Werkzeugmaschine.**

(57) Eine Werkzeugmaschine ist mit einem Maschinenbett und einem am Bett (10) linear geführten Schlitten (23) eines Spindelstockes versehen. Hierzu ist am Maschinenbett eine Führungsschiene (11) und am Schlitten (23) ein formschlüssig auf der Führungsschiene (11) laufender Schuh (20) vorgesehen. Der Schuh (20) und die Führungsschiene (11) liegen mit ebenen Gleitflächen (51 bis 56) aneinander, die durch Oberflächen (51, 53, 55) von Gleitkissen (46, 48, 50) aus Kunststoff bzw. durch metallische Oberflächen (52, 54, 56) gebildet werden. Die Führungsschiene (11) weist einen schmaleren unteren Abschnitt (15) sowie einen breiteren, oberen Abschnitt (16) auf, der seitlich mit einem Vorsprung (17) über den unteren Abschnitt (15) vorsteht. Der Schuh (20) ist in einer Horizontalebene (40) zweigeteilt und an dem Vorsprung (17) mit einem Oberteil (30) an dessen Oberseite sowie mit einem Unterteil (35) an dessen Unterseite geführt.

Fig.3

## WERKZEUGMASCHINE

Die Erfindung betrifft eine Werkzeugmaschine mit einem ersten Maschinenteil, beispielsweise einem Maschinenbett und einem zweiten Maschinenteil, beispielsweise einem Schlitten eines Spindelstockes, wobei die Maschinenteile linear aneinander geführt sind, indem das erste Maschinenteil mit einer sich linear erstreckenden Führungsschiene und das zweite Maschinenteil mit einem formschlüssig auf der Führungsschiene laufenden Schuh versehen ist, wobei ferner der Schuh und die Führungsschiene mit ebenen Gleitflächen aneinanderliegen, die durch Oberflächen von Gleitkissen aus Kunststoff an dem einen Maschinenteil und durch metallische Oberflächen an dem anderen Maschinenteil gebildet werden und die Führungsschiene einen schmalen unteren Abschnitt sowie einen breiteren oberen Abschnitt aufweist, der seitlich mit einem Vorsprung über den unteren Abschnitt vorsteht und der Schuh mit lösbaren Verbindungsmitteln an dem zweiten Maschinenteil angeordnet ist.

Eine Werkzeugmaschine der vorstehend genannten Art ist aus dem Dokument DE-U-89 03 980 bekannt.

Die bekannte Werkzeugmaschine weist eine wälzgelagerte Linearführungseinheit auf. Auf einem Maschinengestell ist eine Schiene mittels Schrauben aufgeschraubt, die eine im wesentlichen X-förmige Querschnittsfläche aufweist. Auf der Schiene läuft ein Schlitten, der seinerseits mittels Schrauben an einem noch darüber angeordneten Maschinentisch lösbar befestigt ist. Zur Führung des Schlittens auf der Schiene ist dieser mit einer angepaßten X-förmigen Ausnehmung versehen, die über ihre ganze Innenoberfläche mit einer Kunststoffschicht ausgekleidet ist.

Damit wird zwar der Schlitten auf dem Maschinengestell derart geführt, daß ein Verkippen des Schlittens um die Längsachse der Schiene herum verhindert wird, weil der Formschluß zwischen Schiene und Schlitten nicht-rotationssymmetrisch ist, andererseits ist es bei dieser bekannten Werkzeugmaschine zwingend erforderlich, den Schlitten über die Stirnseiten der Schiene auf diese aufzuschieben, weil der Schlitten einstückig ausgebildet ist und anders als linear über die Stirnflächen der Schiene von dieser nicht abgenommen werden kann.

Aus dem Dokument DE-A-35 31 813 ist eine Werkzeugmaschine mit einem Schlittenführungssystem bekannt, bei dem ein Schlitten auf einer im Querschnitt trapezförmigen Führungsleiste läuft, die ihrerseits auf der schmalen Oberseite einer wandartigen Konsole befestigt ist. Die Anordnung ist dabei so getroffen, daß die Führungsleiste seitlich über die Konsole übersteht. Der Schlitten ist demzufolge an seiner Unterseite mit einer entsprechenden trapezförmigen Ausnehmung versehen und die Oberseite sowie die schräge Seitenfläche dieser Ausnehmung sind jeweils mit Kunststoff-Gleitkissen ausgekleidet. Eine weitere, vertikal verlaufende Seitenfläche ist über Wälzlager am Schlitten abgestützt.

Um ein Verkippen des Schlittens um die Längsachse der Führungsleiste herum zu vermeiden, ist der Schlitten an seiner Unterseite mit einer Andrückvorrichtung versehen, die die vorstehende Unterseite der Führungsleiste untergreift. Die Andrückvorrichtung ist an ihrer Oberseite ebenfalls mit einem Wälzlager versehen. Auf diese Weise wird eine Anordnung erreicht, bei der der Schlitten samt der Andrückvorrichtung an der rechten, vertikalen Seite sowie an der waagerechten Unterseite über ein Wälzlager und andererseits an der waagerechten Oberseite sowie einer weiteren, geneigten Seite mittels eines Kunststoff-Gleitkissens an der Führungsleiste anliegt.

Bei dieser bekannten Werkzeugmaschine ist es zwar möglich, die Andrückvorrichtung vom Schlitten abzuschrauben, um dann den Schlitten nach oben von der Führungsleiste abheben zu können, bei der bekannten Werkzeugmaschine bildet der Schlitten aber den gesamten Maschinentisch, so daß bei einem Verschleiß der Gleitkissen der gesamte Maschinentisch demontiert und repariert werden muß. Auch beim Remontieren der Anordnung ist äußerste Vorsicht geboten, weil während des Aufsetzens des sehr schweren als Schlitten ausgebildeten Maschinentischs die Wälzlager an den seitlichen Führungsebenen der Führungsleisten leicht beschädigt werden können, zumal eine spiegelsymmetrische Anordnung zweier paralleler Führungsleisten verwendet wird, die sich im Abstand parallel zueinander erstrecken. Aufgrund dieser Konfiguration muß der Maschinentisch äußerst präzise von oben auf die beiden Führungsleisten aufgesetzt werden, damit die Wälzelemente der beiden Wälzlager gerade ohne Beschädigung seitlich an den vertikalen Führungsflächen der Führungsleisten nach unten gleiten können, bis der Maschinentisch mit den Kunststoff-Gleitkissen auf die Führungsleisten aufsetzt.

Aus dem Prospekt "GT" Gleitbelagtechnik GmbH SKC 3, 1982, Seite 8, ist es bekannt, bei der konstruktiven Gestaltung von Führungsflächen für Werkzeugmaschinen eine Führungsschiene mit im wesentlichen rechteckförmiger Querschnittsfläche zu verwenden, die jedoch in ihrer oberen Hälfte an einer Seite einen seitlichen Vorsprung aufweist. Ein auf der Führungsschiene laufendes Führungsteil umfaßt die Führungsschiene an der horizontalen Oberseite, an der einen vertikal durchgehenden Seite sowie auf der gegenüberliegenden Seite im Bereich des Vorsprungs auf dessen vertikal kürzerer Seite. Die Führungsflächen werden dabei durch Gleitkissen aus Kunststoff gebildet, so daß eine Oberflächenpaarung Metall/Kunststoff vorliegt. Die Gleitkissen werden nach dem genannten Prospekt dadurch gebildet, daß sie durch Spachteln aufgetragen oder mittels Einpressen in eine Form hergestellt werden. Aus dem genannten Prospekt ist es auch bekannt, derartige Führungen für Werkzeugmaschinen einzusetzen. Das Führungsteil ist dabei einstückig mit der zu verfahrenden Einheit, so daß bei evtl. Reparaturen oder Wartungsarbeiten das zu führende Teil insgesamt abgenommen und das Gleitkissen von dem sehr großen Führungsteil entfernt werden muß.

Bei Bearbeitungszentren, d.h. numerisch gesteuerten Werkzeugmaschinen, die an einem Werkstück eine Vielzahl aufeinander folgender Bearbeitungsvorgänge, insbesondere Fräs- und Bohrarbeiten ausführen, werden Linearführungen mit Führungsschienen und Schlitten beispielsweise verwendet, um einen Spindelstock in zwei zueinander senkrechten Horizontalachsen und einer Vertikalachse zu verfahren. Bei herkömmlichen Bearbeitungszentren verwendet man an den Schlitten angeordnete Schuhe, die über eine Kugelführung an entsprechend prismatisch ausgebildeten Führungsschienen laufen. Bei derartigen Führungen ist also eine Oberflächenpaarung Metall/Metall im Führungsbereich vorhanden.

Obwohl die Oberflächenpaarung Metall/Metall Vorteile hat, was die Präzision der Führung und damit die Maßhaltigkeit der bearbeiteten Werkstücke angeht, so können sich gelegentlich Nachteile mit einer Paarung Metall/Metall ergeben, wenn die Werkzeugmaschine Vibrationen ausgesetzt ist. Derartige Vibrationen treten beispielsweise beim Fräsen auf, wenn große Späne vom Werkstück abgenommen werden. Bei einem solchen Bearbeitungsvorgang kann die Oberflächenpaarung Metall/Metall nachteilig sein, weil sie eine sehr harte Verbindung zwischen den beiden Maschinenteilen, beispielsweise dem Spindelstock und dem Maschinenbett, herstellt, so daß es zu unerwünschten Schwingungen im Bearbeitungszentrum kommen kann.

Andererseits entsteht bei derartigen Bearbeitungsvorgängen häufig das Problem, daß bei derart hohen Zerspanleistungen auch erhebliche Kräfte, nämlich Reaktionskräfte, auf den Spindelstock ausgeübt werden. Diese Reaktionskräfte können in alle Richtungen gerichtet sein, beispielsweise auch aufwärts.

Der Erfindung liegt daher die Aufgabe zugrunde, eine Werkzeugmaschine der eingangs genannten Art dahingehend weiterzubilden, daß insbesondere bei Bearbeitungszentren, die Fräsarbeiten mit großer Spanleistung ausführen sollen, die Führung der Maschinenteile aneinander eine gewisse Eigendämpfung aufweist und außerdem die Maschinenteile aneinander in soviel Koordinatenrichtungen wie möglich formschlüssig gehalten sind, wobei die Führungselemente der Maschinenteile mit geringst möglichem Aufwand reparierbar sein sollen, ohne dabei das gesamte zu führende Maschinenteil in größerem Maße handhaben zu müssen.

Diese Aufgabe wird erfindungsgemäß dadurch gelost, daß der Schuh in einer Horizontalebene zweigeteilt ist und an dem Vorsprung mit einem Oberteil an dessen Oberseite und mit einem Unterteil an dessen Unterseite geführt ist.

Die der Erfindung zugrundeliegende Aufgabe wird auf diese Weise vollkommen gelöst. So macht sich nämlich die Erfindung zum einen die an sich bekannte Tatsache zunutze, daß Führungen von Werkzeugmaschinen mit Kunststoff-Gleitkissen eine natürliche Eigendämpfung aufweisen, so daß größere Vibrationen von Bearbeitungsvorgängen mit großer Spanabnahme nicht oder nur stark gedämpft von einem Maschinenteil auf das andere übertragen werden. Darüberhinaus verwendet die Erfindung eine Führung des Schuhs an der Führungsschiene mit einem Untergriff, so daß die Maschinenteile in allen Koordinatenrichtungen senkrecht zur Erstreckung der Führungsschiene formschlüssig geführt werden können. Dies gilt insbesondere bei horizontal verlaufenden Führungsschienen, wenn auf das geführte Maschinenteil eine vertikal nach oben gerichtete Kraft, beispielsweise eine Reaktionskraft des Werkzeuges, ausgeübt wird. Dadurch, daß der Schuh mit lösbaren Verbindungsmitteln an dem zweiten Maschinenteil angeordnet ist, ist es in sehr einfacher Weise möglich, die Führungselemente auszutauschen, wenn diese beschädigt oder verschlissen sein sollten. Man braucht dann nämlich lediglich durch das Lösen der genannten Verbindungsmittel den Schuh vom zweiten Maschinenteil zu entfernen, beispielsweise abzuschrauben und einen anderen, neuen Schuh anzuschrauben, so daß auch die Stillstandszeiten der Werkzeugmaschine minimiert werden. Dies unterscheidet die erfindungsgemäße Werkzeugmaschine auch von dem eingangs erläuterten Stand der Technik (Prospekt "GT"), weil dort das Führungsteil unmittelbar und gesamthaft mit dem Belag versehen war, mit der Folge, daß das Führungsteil insgesamt gehandhabt und bearbeitet werden muß, wenn die Beläge verschlissen sind. Hierdurch stellen sich erhebliche Stillstandszeiten der mit diesen Führungen versehenen Maschine ein.

Bei einer bevorzugten Weiterbildung der erfindungsgemäßen Werkzeugmaschine sind an dem zweiten Maschinenteil mehrere Schuhe in Richtung der Führungsschiene hintereinander angeordnet. Insbesondere sind zwei parallele Führungsschienen an dem ersten Maschinenteil angeordnet, auf denen Schuhe, beispielsweise zwei mal zwei oder zwei mal drei Schuhe des zweiten Maschinenteils laufen.

Diese Maßnahmen haben den Vorteil, daß die Führungselemente räumlich auf die relativ kleinen Schuhe reduziert werden, wodurch Platz gespart wird und außerdem durch das nahezu punktförmige Führen an zwei mal zwei oder zwei mal drei Positionen auch ein Verkanten verhindert wird.

Bei einer bevorzugten Ausgestaltung der Erfindung sind die Gleitkissen in dem einen Maschinenteil in an sich bekannter Weise formschlüssig gehalten.

Diese Maßnahme hat den Vorteil, daß die Gleitkissen gegen Verschiebung an dem jeweiligen Maschinenteil, an dem sie befestigt sind, gesichert sind.

Bei einer weiteren besonders bevorzugten Ausgestaltung der Erfindung sind die Gleitkissen in ebenfalls an sich bekannter Weise über in dem einen Maschinenteil angeordnete Einspritzbohrungen in Ausnehmungen des einen Maschinenteils gegen eine Form gespritzt. Dabei laufen die Gleitkissen allerdings mit einem Anguß in die als Gewindebohrungen ausgebildeten Einspritzbohrungen aus.

Diese Maßnahme hat den Vorteil, daß die Gleitkissen ebenfalls zuverlässig in ihren Ausnehmungen gehalten werden, weil sich die Angußabschnitte in den Gewindebohrungen verkrallen und daher für einen sicheren mechanischen Halt der Gleitkissen sorgen.

Bei einer weiteren bevorzugten Ausgestaltung der Erfindung sind die Ausnehmungen mit einer unebenen, insbesondere einer gezahnten Oberfläche versehen.

Auch diese Maßnahme hat den Vorteil, daß ein Verrutschen der Gleitkissen, insbesondere in Erstreckungsrichtung der Führungsschiene, sicher vermieden wird.

Bei weiteren bevorzugten Ausgestaltungen der Erfindung sind in den Gleitkissen Schmiernuten angeordnet.

Diese Maßnahme hat den Vorteil, daß Schmiermittel in den Bereich der Oberflächenpaarung Kunststoff/Metall gebracht werden kann, so daß die Reibungskräfte besonders niedrig gehalten werden können.

Eine besonders bevorzugte Ausführungsform der Erfindung zeichnet sich weiterhin dadurch aus, daß an Längsseiten des Schuhs Durchgangsbohrungen zum Befestigen des Schuhs an dem anderen Maschinenteil in einer Reihe mit Befestigungsbohrungen zum Verschrauben des Oberteils mit dem Unterteil angeordnet sind, wobei die Bohrungen in von einer Seite des Unterteiles eingebrachte Ausnehmungen auslaufen, die über Stege des Unterteils voneinander getrennt sind.

Diese Maßnahme hat den Vorteil, daß eine einfache Montage des Schuhs, d.h. ein Zusammenfügen des Oberteils mit dem Unterteil an der Führungsschiene möglich ist, weil die seitlich auslaufenden Ausnehmungen es gestatten, mit einem abgekröpften Werkzeug, beispielsweise einem Sechskantschlüssel, sowohl diejenigen Schrauben anzuziehen, die zum Verbinden der beiden Teile dienen, wie auch diejenigen Schrauben, die zum Verbinden des Schuhs mit dem anderen Maschinenteil, beispielsweise dem Schlitten des Spindelstocks dienen. Die Maßnahme, separate Ausnehmungen zu verwenden, die durch Stege des Materiales des Unterteiles voneinander getrennt sind, hat den wesentlichen Vorteil, daß die mechanische Stabilität des Schuhs gegenüber dem Fall deutlich erhöht wird, daß eine an der Seite über alle Bohrungen durchgehende Ausnehmung verwendet würde. Außerdem haben diese Stege den Vorteil, daß sie zum Unterbringen von Schmiermittelkanälen genutzt werden können, die zu den Schmiernuten führen.

Weiterhin ist bei einer weiteren bevorzugten Ausgestaltung der Erfindung vorgesehen, daß der Schuh mit den Gleitkissen versehen ist und an seinen axialen Stirnseiten Abdeckrahmen aufweist, die mindestens die aus Oberflächen des Schuhs vorstehenden Abschnitte der Gleitkissen axial abdecken.

Diese Maßnahme hat den Vorteil, daß der gesamte von dem Schuh umschlossene Querschnitt bis auf den Querschnitt der Führungsschiene zuverlässig abgedeckt ist, so daß einerseits die Gleitkissen auch durch diese Maßnahme in Erstreckungsrichtung der Führungsschiene gehalten sind, andererseits aber auch verhindert wird, daß Schmutz in den Bereich der Führungsschienen gelangt.

Schließlich ist noch eine Ausführungsform der Erfindung besonders bevorzugt, bei der die Trennebene oberhalb einer Auflagefläche des an der Unterseite des Vorsprunges anliegenden Gleitkissens des Unterteils verläuft.

Diese Maßnahme hat den Vorteil, daß die Ebenen der Trennebene einerseits und der Auflagefläche andererseits voneinander beabstandet sind, so daß z.B. das Unterteil im Bereich seiner Trennebene abgeschliffen werden kann, wie bereits erwähnt, ohne daß hierbei die Auflagefläche des Gleitkissens weiteren Schaden nimmt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Draufsicht auf eine Linearführung einer erfindungsgemäßen Werkzeugmaschine;

Fig. 2 eine Darstellung, im Schnitt, in Richtung der Pfeile II-II von Fig. 1;

Fig. 3 in vergrößertem Maßstab eine weitere Schnittdarstellung entlang der Linie III-III von Fig. 1;

Fig. 4 eine weitere Schnittdarstellung, ebenfalls in vergrößertem Maßstab, in Richtung der Pfeile IV-IV von Fig. 5;

Fig. 5 eine weitere Schnittdarstellung, ebenfalls in vergrößertem Maßstab, entlang der Linie V-V von Fig. 4;

Fig. 6 in stark vergrößertem Maßstab einen Ausschnitt aus der Darstellung gemäß Fig. 5.

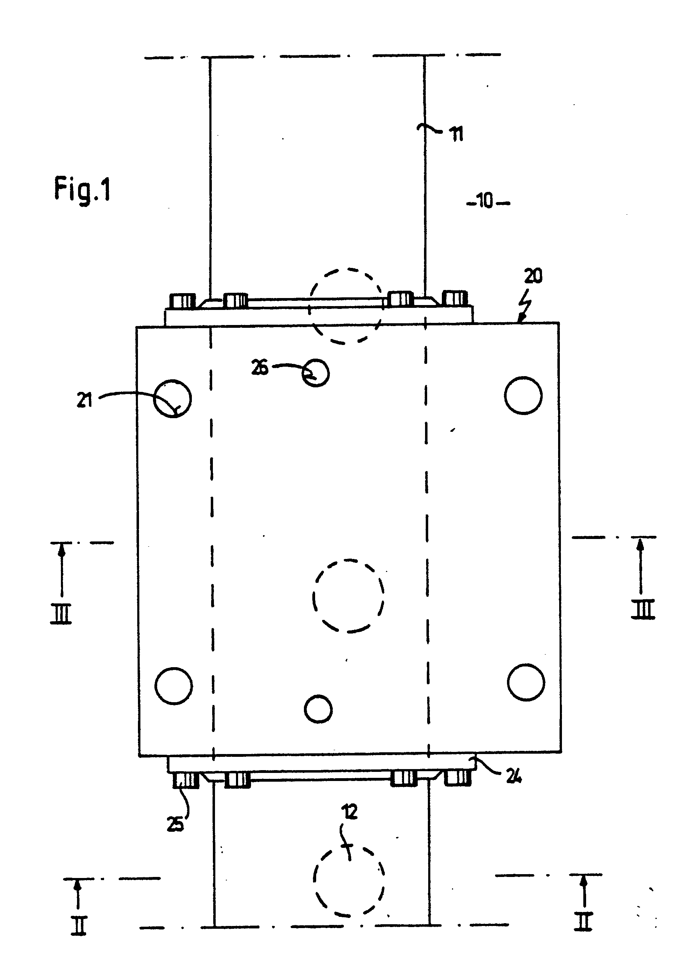

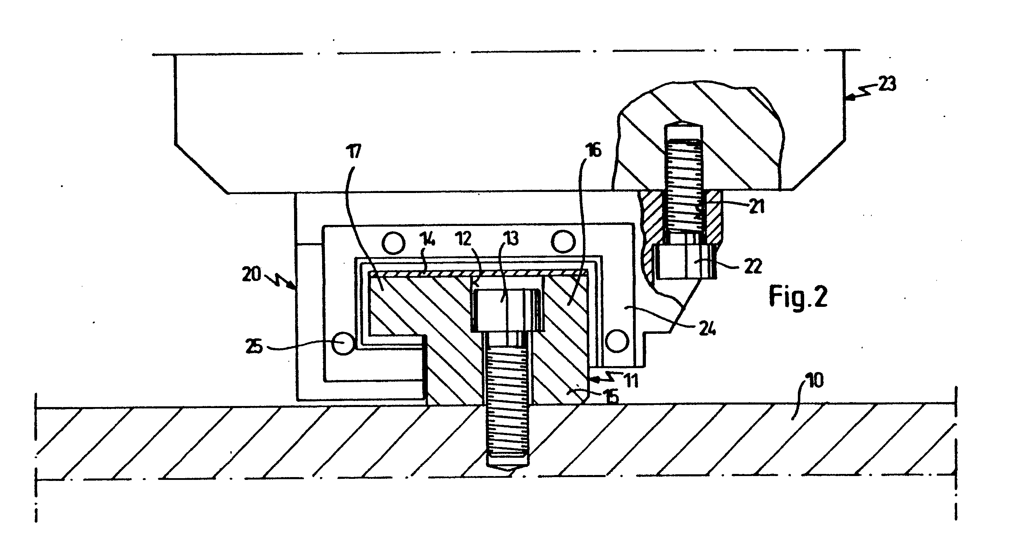

In den Fig. 1 und 2 bezeichnet 10 insgesamt ein Bett einer Werkzeugmaschine, beispielsweise eines Bearbeitungszentrums zum numerisch gesteuerten Ausführen von Bohr- und Fräsarbeiten an Werkstücken.

Auf einer horizontal verlaufenden Oberfläche des Bettes 10 ist eine Führungsschiene 11 angeordnet. Hierzu ist die Führungsschiene 11 mit axial beabstandeten Durchgangs-Stufenbohrungen 12 versehen, durch die hindurch Schrauben 13 geführt sind, um die Führungsschiene 11 mit dem Bett 10 zu verschrauben. Ein Abdeckblech 14 deckt die Führungsschiene und die Durchgangs-Stufenbohrungen 12 nach oben ab.

In einer Ansicht quer zur Längserstreckung der Führungsschiene 11 besitzt diese einen schmaleren unteren Abschnitt 15 und einen breiteren oberen Abschnitt 16, so daß der obere Abschnitt 16 an einer Seite, in Fig. 2 auf der linken Seite, mit einem Vorsprung 17 über den unteren Abschnitt 15 vorsteht.

Auf der Führungsschiene 11 läuft ein Gleitschuh 20. Der Gleitschuh 20 ist mit Durchgangsbohrungen 21 versehen, die entlang von Längsseiten des Gleitschuhs 20 angeordnet sind. Die Bohrungen 21 dienen zur Aufnahme von Schrauben 22, um den Gleitschuh 20 an dessen Oberseite mit einem bewegten Maschinenteil, beispielsweise einem Schlitten 23 eines Spindelstockes der Werkzeugmaschine verschrauben zu können.

Bevorzugt sind auf dem Maschinenbett 10 zwei parallele Führungsschienen 11 angeordnet und auf jeder Führungsschiene 11 laufen zwei oder drei Gleitschuhe 20 hintereinander, die mit dem Schlitten 23 verschraubt sind. Auf diese Weise wird der Schlitten 23 über eine Zweimalzwei- oder Zweimaldrei-Führung an den Führungsschienen 11 und damit am Maschinenbett 10 geführt.

An den axialen Stirnflächen ist der Gleitschuh 20 mit Abdeckrahmen 24 versehen, die mittels Schrauben 25 angeschraubt sind. Die Abdeckrahmen 24 sind mit einem Fenster versehen, dessen Querschnitt gerade dem radialen Querschnitt der Führungsschiene 11 entspricht, so daß die Abdeckrahmen 24 beim Verschieben des Gleitschuhs 20 dicht auf den Oberflächen der Führungsschiene 11 laufen.

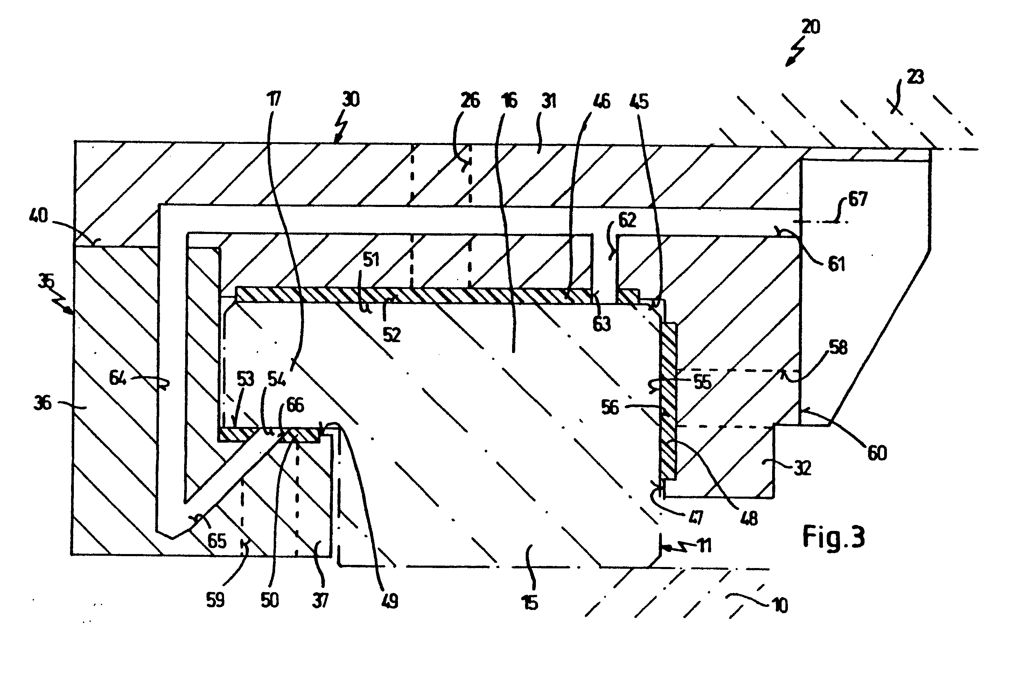

In Fig. 3 sind weitere Einzelheiten der Gleitführung zwischen der Führungsschiene 11 und dem Gleitschuh 20 dargestellt.

So zeigt Fig. 3, daß der Gleitschuh 20 ein Oberteil 30 aufweist, das aus einem oberen, waagerechten Abschnitt 31 und einem rechten, senkrechten Abschnitt 32 besteht. An das Oberteil 30 ist nach unten ein Unterteil 35 angefügt, das aus einem linken, senkrechten Abschnitt 36 sowie einem unteren, waagerechten Abschnitt 37 besteht. Das Oberteil 30 ist vom Unterteil 35 entlang einer horizontalen Trennungsebene 40 getrennt.

An einer unteren Oberfläche 45 des oberen, waagerechten Abschnittes 31 befindet sich ein erstes Gleitkissen 46 aus Kunststoff, das in einer entsprechenden Ausnehmung in der unteren Oberfläche 45 seitlich formschlüssig gehalten ist. Eine linke Oberfläche 47 des rechten, senkrechten Abschnittes 32 ist in einem zweiten Gleitkissen 48 entsprechender Machart versehen.

Schließlich ist an einer oberen Oberfläche 49 des unteren, waagerechten Abschnittes 37 ein drittes Gleitkissen 50, ebenfalls entsprechender Machart, angeordnet.

Auf diese Weise wird, wie Fig. 3 deutlich zeigt, der Gleitschuh 20 formschlüssig an der Führungsschiene 11 geführt und zwar mit einer Oberflächenpaarung 51, 52 Kunststoff/Metall an der Oberseite des breiten, oberen Abschnittes 16 der Führungsschiene 11, mit einer Oberflächenpaarung 53, 54 an der Unterseite des Vorsprunges 17 sowie mit einer Oberflächenpaarung 55, 56 an der durchgehenden rechten Vertikalseite der Führungsschiene 11.

Auf diese Weise ist der Gleitschuh 20 an der Führungsschiene 11 derart geführt, daß der Gleitschuh 20 weder nach oben von der Führungsschiene 11 abgehoben noch um eine zur Führungsschiene 11 parallele Achse gekippt werden kann.

Man sieht in Fig. 3 ferner deutlich, daß die Trennebene 40 weit oberhalb der Auflagefläche 53 des Gleitkissens 50 angeordnet ist, mit dem der waagerechte Abschnitt 37 des Unterteils 35 von unten an der Unterseite 54 des Vorsprunges 17 anliegt.

Da das Oberteil 30 des Gleitschuhs 20 mit dem Unterteil 35 lösbar verbunden ist, kann der Untergriff des Gleitschuhs 20 in Gestalt des unteren, waagerechten Abschnittes 37, leicht montiert werden, beispielsweise dann, wenn der Schlitten 23 mit an seiner Unterseite angeschraubtem Oberteil 30 des Gleitschuhs 20 auf die Führungsschiene 11 aufgesetzt wurde. Die Fixierung und formschlüssige Halterung des Schlittens 23 wird dann in einfacher Weise dadurch erzielt, daß das Unterteil 35 von unten an das Oberteil 30 angeschraubt wird.

Man kann ferner, falls die horizontalen Gleitkissen 46 und 50 verschlissen sein sollten, das Unterteil 35 vom Oberteil 30 abschrauben und die die horizontale Trennungsebene 40 bildende Oberfläche des Unterteils 35 geringfügig abschleifen, beispielsweise um 3/100 mm. Wenn dann das Unterteil 35 wieder von unten an das Oberteil 30 angeschraubt wird, so sitzt der Gleitschuh 20 wieder formschlüssig spielfrei an der Führungsschiene 11.

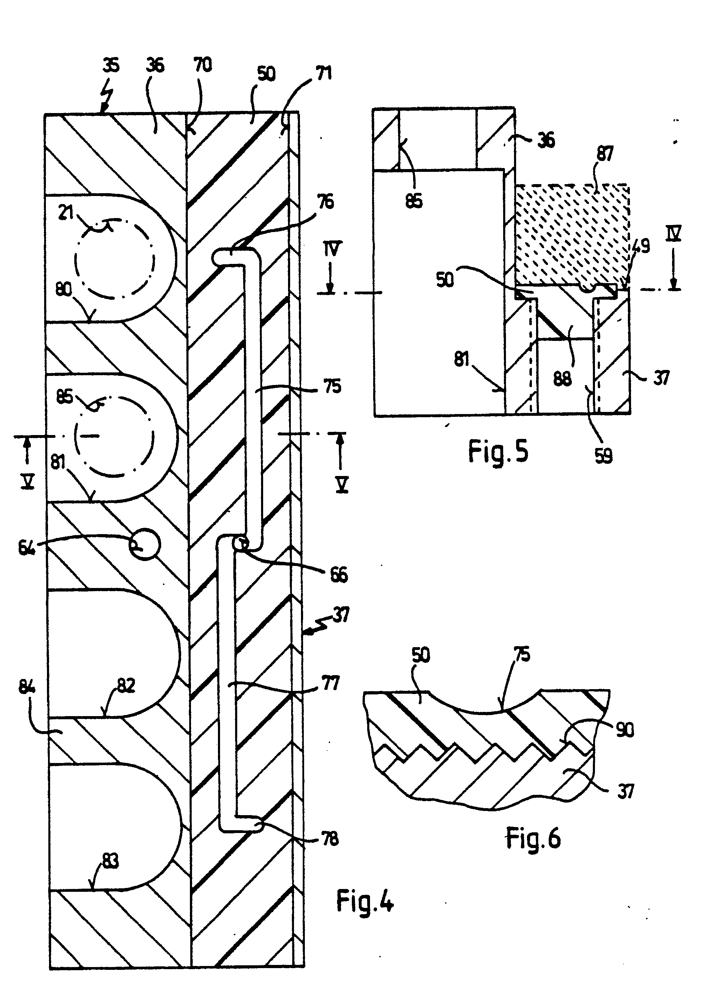

Zur Anbringung der Gleitkissen 46, 48, 50 sind Einspritzbohrungen 26, 58, 59 vorgesehen, die sich jeweils senkrecht zu der von den Gleitkissen 46, 48, 50 definierten Ebene durch das Oberteil 30 bzw. das Unterteil 35 hindurch erstrecken. Auf diese Weise ist es möglich, die Gleitkissen 46, 48, 50 an den besagten Oberflächen des Gleitschuhs 20 herzustellen, wie dies weiter unten anhand der Fig. 5 noch erläutert werden wird.

In Fig. 3 ist ferner zu erkennen, daß das Oberteil 30 an seiner rechten Seite mit einer axial durchgehenden Ausnehmung 60 versehen ist. Die axiale Ausnehmung 60 ist in ihrer Höhe gestuft ausgebildet. So ist die Ausnehmung 60 an dem in Fig. 1 oberen und unteren Ende des Gleitschuhs 20 dicker ausgebildet, um dort die Durchgangsbohrungen 21 für die Schrauben 22 zu bilden. In dem in Fig. 3 gezeigten Bereich ist die Ausnehmung 60 hingegen höher ausgebildet, so daß ein horizontaler Schmiermittelkanal 61 seitlich eingebracht werden kann. Vom Schmiermittelkanal 61 geht zunächst ein Seitenkanal 62 nach unten ab, um über eine Bohrung 63 in der Oberfläche 51 des ersten Gleitkissens 56 zu münden. Der Schmiermittelkanal 61 überspannt dann nahezu die gesamte Breite des Oberteils 30 und biegt dann mit einem Abschnitt 64 nach unten ab, um dann kurz vor Erreichen der Unterseite des Unterteils 35 wieder mit einem Abschnitt 65 nach oben abgewinkelt zu werden. Der Abschnitt 65 mündet dann in einer Bohrung 66 in der Oberfläche 53 des dritten Gleitkissens 50.

Mit 67 ist ein Schmiermittelanschluß am Schmiermittelkanal 61 angedeutet, der es gestattet, das gesamte Kanalsystem mit einem einzigen Anschluß zu versorgen, der überdies mechanisch durch die Ausnehmung 60 geschützt ist.

Fig. 4 zeigt einen Horizontalschnitt durch das Unterteil 35. Man erkennt zunächst, daß das dritte Gleitkissen 50, wie bereits erwähnt, in einer Ausnehmung des unteren waagerechten Abschnittes 37, nämlich in einer Art Rinne 70, 71 angeordnet ist. Man erkennt ferner, daß von der Bohrung 66 des Schmiermittelkanals Abschnitte 75, 76, 77, 78 von Schmiernuten abgehen, die abschnittsweise (75, 77) axial und abschnittsweise (76, 78) radial verlaufen und auf diese Weise eine Mäanderanordnung bilden.

In die linke Seitenfläche des Unterteils 35 sind vier voneinander beabstandete Ausnehmungen 80 bis 83 angebracht, die mit Stegen 84 des Materials des Unterteils voneinander getrennt sind.

Die Ausnehmungen 80 bis 83 haben ebenso wie die auf der gegenüberliegenden Seite des Gleitschuhs 20 angeordnete, durchgehende Ausnehmung 60 den Zweck, von unten bzw. von der Seite her Schrauben einbringen und anziehen zu können. In Fig. 4 dienen beispielsweise die oberste und die unterste Ausnehmung 80, 83 zur Aufnahme der Befestigungsschrauben 22, wie mit der angedeuteten Bohrung 21 in der obersten Ausnehmung 80 angedeutet ist. Die beiden mittleren Ausnehmungen 81, 82 dienen hingegen zur Aufnahme von Verbindungsschrauben, mit denen das Oberteil 30 bzw. Unterteil 35 verschraubt wird. Hierzu ist das Unterteil 35 oberhalb der Ausnehmungen 81, 82 mit jeweils einer Durchgangsbohrung 85 versehen.

In Fig. 5 ist am Beispiel des dritten Gleitkissens 50 dargestellt, wie dieses in der Rinne 70, 71 (Fig. 4) eingebracht wird.

Hierzu wird eine Form 87 auf die obere Oberfläche 49 des unteren, waagerechten Abschnittes 37 aufgesetzt. Die Form 87 ist mit einer Unterseite versehen, deren Form komplementär zur gewünschten Form des dritten Gleitkissens 50 ausgebildet ist. Wenn die Form 87 aufgesetzt und fixiert ist, wird über die dritte Einspritzbohrung 59 ein Kunststoff eingespritzt.

Dieser Kunststoff besteht vorzugsweise aus einem Epoxidharz mit geeigneten Füllstoffen. Da die Einspritzbohrungen als Gewindebohrungen ausgebildet sind, kann zum einen ein Spritzwerkzeug in einfacher Weise an die Einspritzbohrungen 59 durch Schrauben angesetzt werden. Andererseits hat die Ausbildung als Gewindebohrung aber auch den Vorteil, daß sich die in den Einspritzbohrungen ausbildenden Angußabschnitte, beispielsweise der in Fig. 5 gezeigte Anguß 88 in dem Gewinde verkrallen und damit eine weitere mechanische Sicherung für die Gleitkissen 46, 48, 50 darstellen.

Um die Haftung der Gleitkissen 46, 48, 50 auf den entsprechenden Oberflächen 45, 47, 49 noch weiter zu verbessern, können diese, wie Fig. 6 zeigt, mit einer gezahnten oder sonstwie unregelmäßigen Oberfläche 90 versehen werden.

**Ansprüche**

1. Werkzeugmaschine mit einem ersten Maschinenteil, beispielsweise einem Maschinenbett (10) und einem zweiten Maschinenteil, beispielsweise einem Schlitten (23) eines Spindelstockes, wobei die Maschinenteile linear aneinander geführt sind, indem das erste Maschinenteil mit einer sich linear erstreckenden Führungsschiene (11) und das zweite Maschinenteil mit einem formschlüssig auf der Führungsschiene (11) laufenden Schuh (20) versehen ist, wobei ferner der Schuh (20) und die Führungsschiene (11) mit ebenen Gleitflächen (51 bis 56) aneinanderliegen, die durch Oberflächen (51, 53, 55) von Gleitkissen (46, 48, 50) aus Kunststoff an dem einen Maschinenteil und durch metallische Oberflächen (52, 54, 56) an dem anderen Maschinenteil gebildet werden, und die Führungsschiene (11) einen schmaleren unteren Abschnitt (15) sowie einen breiteren oberen Abschnitt (16) aufweist, der seitlich mit einem Vorsprung (17) über den unteren Abschnitt (15) vorsteht und der Schuh (20) mit lösbaren Verbindungsmitteln (22) an dem zweiten Maschinenteil (23) angeordnet ist, dadurch gekennzeichnet, daß der Schuh (20) in einer Horizontalebene (40), zweigeteilt ist und an dem Vorsprung (17) mit einem Oberteil (30) an dessen Oberseite (52) und mit einem Unterteil (35) an dessen Unterseite (54) geführt ist.

2. Werkzeugmaschine nach Anspruch 1, dadurch gekennzeichnet, daß an dem zweiten Maschinenteil (23) mehrere Schuhe (20) in Richtung der Führungsschiene (11) hintereinander angeordnet sind.

3. Werkzeugmaschine nach Anspruch 1 oder 2, dadurch gekennzeichnet, daß zwei parallele Führungsschienen (11) an dem ersten Maschinenteil (10) angeordnet sind, auf denen Schuhe (20) des zweiten Maschinenteils (23) laufen.

4. Werkzeugmaschine nach einem oder mehreren der Ansprüche 1 bis 3, dadurch gekennzeichnet, daß die Gleitkissen (46, 48, 50) in dem einen Maschinenteil formschlüssig gehalten sind.

5. Werkzeugmaschine nach einem oder mehreren der Ansprüche 1 bis 4, dadurch gekennzeichnet, daß die Gleitkissen (46, 48, 50) über in dem einen Maschinenteil angeordnete Einspritzbohrungen (26, 58, 59) in Ausnehmungen (70, 71) des einen Maschinenteils gegen eine Form (87) gespritzt sind, und daß die Gleitkissen (46, 48, 50) mit einem Anguß (88) in die als Gewindebohrungen ausgebildeten Einspritzbohrungen (26, 58, 59) auslaufen.

6. Werkzeugmaschine nach Anspruch 5, dadurch gekennzeichnet, daß die Ausnehmungen (70, 71) mit einer unebenen, insbesondere einer gezahnten Oberfläche (90) versehen sind.

7. Werkzeugmaschine nach einem oder mehreren der Ansprüche 1 bis 6, dadurch gekennzeichnet, daß in den Gleitkissen (46, 48, 50) Schmiernuten (75 bis 78) angeordnet sind.

8. Werkzeugmaschine nach einem oder mehreren der Ansprüche 1 bis 7, dadurch gekennzeichnet, daß an Längsseiten des Schuhs (20) Durchgangsbohrungen (21) zum Befestigen des Schuhs (20) an dem anderen Maschinenteil in einer Reihe mit Befestigungsbohrungen (85) zum Verschrauben des Oberteils (30) mit dem Unterteil (35) angeordnet sind, wobei die Bohrungen (21, 85) in von einer Seite des Unterteiles (36) eingebrachte Ausnehmungen (80 bis 83) auslaufen, die über Stege (82) des Unterteiles (35) voneinander getrennt sind.

9. Werkzeugmaschine nach einem oder mehreren der Ansprüche 1 bis 8, dadurch gekennzeichnet, daß der Schuh (20) mit den Gleitkissen (46, 48, 50) versehen ist und Abdeckrahmen (24) aufweist, die mindestens die aus Oberflächen (45, 47, 49) des Schuhs (20) vorstehenden Abschnitte der Gleitkissen (46, 48, 50) axial abdecken.

10. Werkzeugmaschine nach einem oder mehreren der Ansprüche 1 bis 9, dadurch gekennzeichnet, daß die Trennebene (40) oberhalb einer Auflagefläche (53) des an der Unterseite (54) des Vorsprungs (17) anliegenden Gleitkissens (50) des Unterteils (35) verläuft.

Fig.1

Fig.2

Fig.3

Fig.4

Fig.5

Fig.6